# EUROPÄISCHE PATENTANMELDUNG

(11) **EP 0 701 076 A1**
(43) Veröffentlichungstag der Anmeldung: **13.03.1996**
(21) Anmeldenummer: 95112419.7
(22) Anmeldetag: 08.08.1995
(51) Int. Cl.: F16K 31/06, B60T 8/36

(54) **Elektromagnetventil**

(30) Priorität: 06.09.1994 DE 4431651
(71) Anmelder: ROBERT BOSCH GMBH, D-70442 Stuttgart (DE)
(72) Erfinder: Wilde, Werner, D-71701 Schwieberdingen (DE); Friedow, Michael, Dipl. Ing., D-71732 Tamm (DE)

(57) **Zusammenfassung**

Es wird ein Wege-Elektromagnetventil (8) mit drei Anschlüssen vorgeschlagen, bei dem zwischen Einzelteilen (4, 52, 53, 54, 56), die beweglich angeordnet sind, und einem antreibenden Anker (36) eine Stößeleinrichtung (46) vorgesehen ist. Die Stößeleinrichtung (46) besteht aus wenigstens zwei parallel zum Anker (36) ausgerichteten Stößeln (54) und Durchgangsbohrungen (44) zur verschieblichen Aufnahme dieser Stößel (45) innerhalb eines Ventilsitzkörpers (43), der ausgehend von einem Ventilsitz (49) einen zu einem Anschluß führenden Kanal (62) zwischen den Durchgangsbohrungen (44) aufweist. Der Anker (36) kann über die Stößeleinrichtung (46), die reibungsarm arbeitet, das Wege-Elektromagnetventil (8) hysteresearm aus seiner Grundstellung in eine Zwischen- und schließlich in eine Endstellung steuern.

Das Wege-Elektromagnetventil ist beispielsweise einbaubar in Blockierschutzeinrichtungen von Fahrzeugbremsanlagen zum Verändern von Radbremsdrücken.

## Beschreibung

### Stand der Technik

Die Erfindung geht aus von einem Elektromagnetventil nach der Gattung des Hauptanspruchs.

Bei einem solchen durch die Druckschrift DE 31 22 747 A1 bekannten Elektromagnetventil mit beispielsweise drei Anschlüssen und einer eine Grundstellung des Elektromagnetventils bewirkenden Feder werden zum Erreichen einer Zwischenstellung zusätzlich zwei weitere Federn verwendet, die bewirken, daß beim elektromagnetischen Verschieben eines Ankers aus seiner Grundstellung heraus zuerst ein Auslaßsitz geschlossen und willkürlich später unter Überwindung eines Widerstandes dann ein Einlaßsitz geöffnet werden kann oder umgekehrt. Der Zwischenstellung dienende Federn werden deshalb auch als Barriere-Federn bezeichnet. Die Zwischenstellung ermöglicht beispielsweise innerhalb einer hydraulischen Fahrzeugbremsanlage Bremsdruckhaltephasen während eines Blockierschutz-Betriebs. Ein derartiges Elektromagnetventil mit einer Zwischenstellung wird auch als 3/3-Wege-Elektromagnetventil bezeichnet und hat vorteilhafterweise nur einen Elektromagnet und ein Gehäuse mit drei Anschlüssen einerseits eines Endes des Elektromagnets. Bei diesem 3/3-Wege-Elektromagnetventil bereitet die Anordnung einer hydraulischen Abdichtung eines zur Betätigung von Ventilelementen notwendigen verschiebbaren Stößels Schwierigkeiten.

Ein durch die Druckschrift DE 23 63 486 C2 bekanntes weiteres 3/3-Wege-Elektromagnetventil weist insgesamt lediglich zwei Federn auf, von denen man die zwischen zwei relativ zueinander beweglichen Ventilschließelementen liegende Feder als Barriere-Feder bezeichnen kann, hat aber den Nachteil, daß ein zu einem Ventilsitz führender hydraulischer Kanal durch den Elektromagnet hindurchgeführt ist und dadurch den Einbau dieses Elektromagnetventils beispielsweise in eine Blockierschutz-Fahrzeugbremsanlage erschwert.

Der Erfindung liegt die Aufgabe zugrunde, mit Hilfe einfacher konstruktiver Maßnahmen ein Elektromagnetventil der eingangs genannten Art zu schaffen, bei dem die Anordnung einer hydraulischen Abdichtung für einen verschiebbaren Stößel vermieden ist. Außerdem soll das Elektromagnetventil auch im übrigen einen einfachen Aufbau haben.

Diese Aufgabe wird gemäß der Erfindung durch die kennzeichnenden Merkmale des Hauptanspruchs gelöst.

Vorteilhafte Weiterbildungen und Verbesserungen der Erfindung ergeben sich aus den Merkmalen der Unteransprüche. So ist es beispielsweise von Vorteil, daß mit einfachen Mitteln ein 3/2-Wege-Elektromagnetventil oder ein 3/3-Wege-Elektromagnetventil herstellbar ist. Ein wesentliches Merkmal der Erfindung ist eine mehrteilige, wenigsten Zwei Stößel außerhalb der Längsachse des Wege-Elektromagnetventils aufweisende Stößeleinrichtung, weil eine solche Anordnung einerseits eine exakte und verkantungsfreie Übertragung der Kräfte des Ankers auf die beweglichen Ventilelemente gewährleistet und andererseits eine wegen fehlender Dichtungsreibung hysteresefreie Betätigung der Ventilelemente ermöglicht.

Von Vorteil sind außerdem die einfache Einsteckbarkeit des Gehäuses des Wege-Elektromagnetventils in einem Hydraulikblock und das Fehlen eines Strömungskanals innerhalb des Elektromagnets.

### Zeichnung

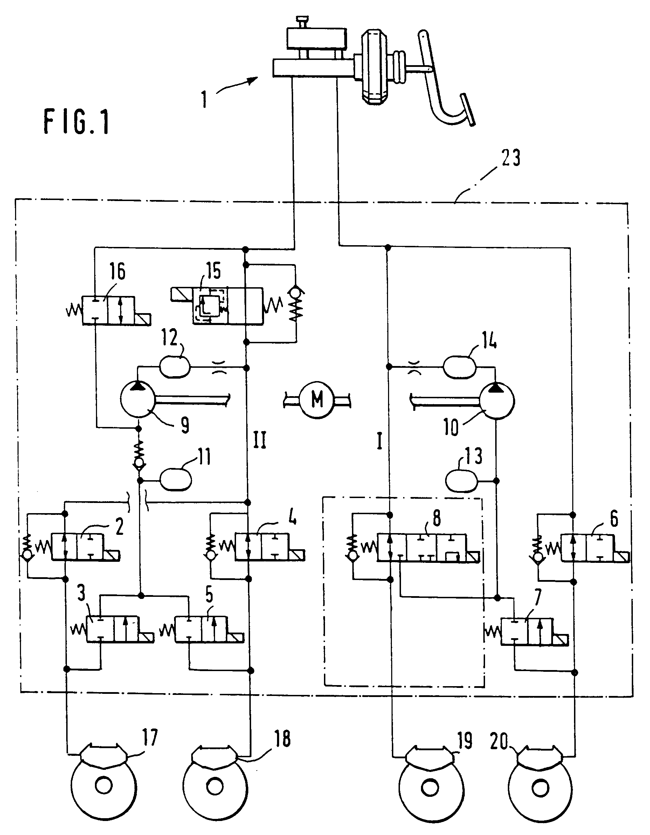

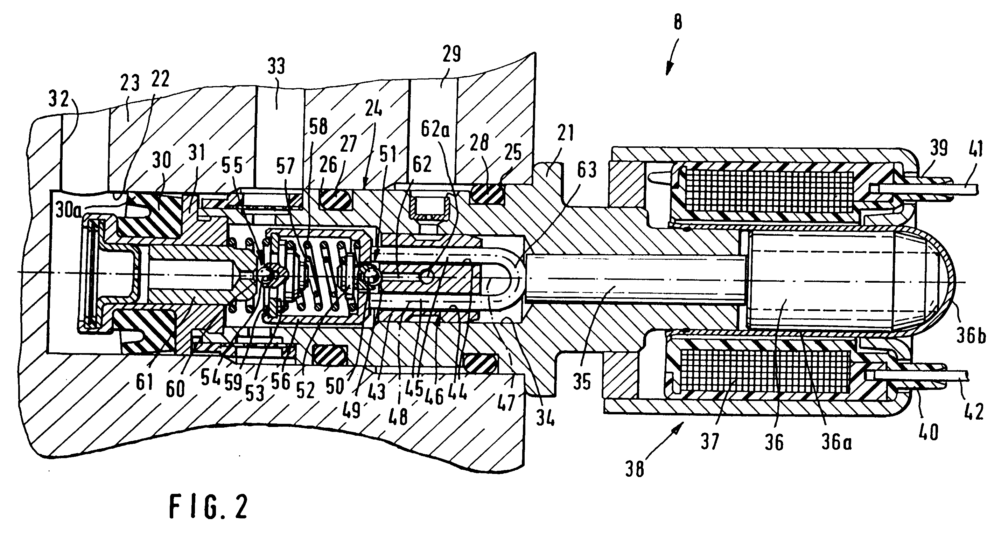

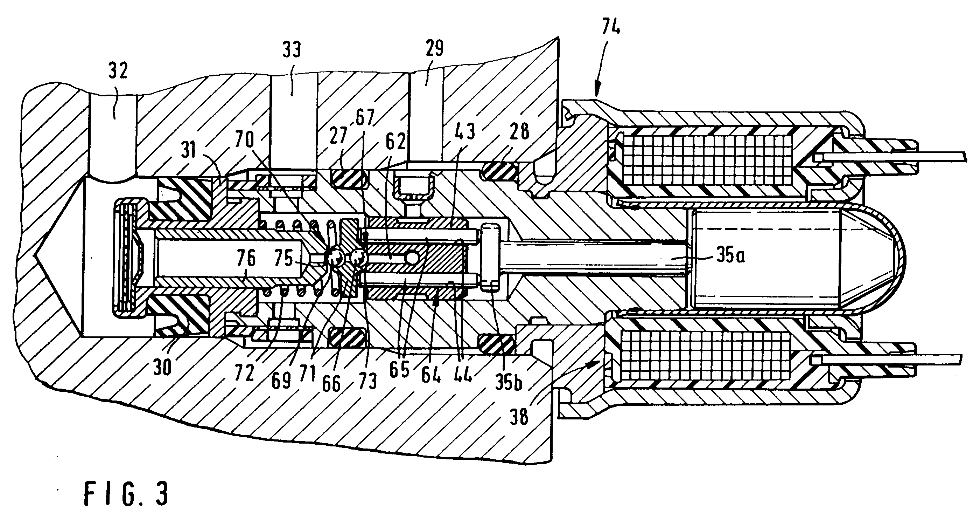

Zwei Ausführungsbeispiele des erfindungsgemäßen Wege-Elektromagnetventils sind in der Zeichnung dargestellt und in der nachfolgenden Beschreibung näher erläutert. Es zeigen Figur 1 ein erfindungsgemäßes Wege-Elektromagnetventil in einem Schaltplan einer Blockierschutzeinrichtung einer Fahrzeugbremsanlage, Figur 2 das Wege-Elektromagnetventil als erstes Ausführungsbeispiel der Figur 1 im Längsschnitt und Figur 3 das zweite Ausführungsbeispiel des erfindungsgemäßen Wege-Elektromagnetventils ebenfalls im Längsschnitt.

### Beschreibung der Ausführungsbeispiele

Ein hydraulisches Bremssystem hat einen Zweikreis-Hauptzylinder 1, der zwei Bremskreise I, II einer Kraftfahrzeugbremsanlage mit Bremsflüssigkeit versorgt. Zu jedem Bremskreis gehört eine Ventileinrichtung, die im Fall des Hinterachs-Bremskreises II aus zwei 2/2-Wege-Elektromagnetventilen 2, 3 bzw. 4, 5 besteht und im Fall des Vorderachs-Bremskreises I aus 2/2-Wege-Magnetventilen 6 und 7 und wahlweise einem der erfindungsgemäßen Wege-Elektromagnetventile beispielsweise in Form eines 3/3-Wege-Elektromagnetventils 8 der Figur 2 oder eines 3/2-Wege-Elektromagnetventils 74 der Figur 3 herstellbar ist. In der Figur 2 ersetzt das erfindungsgemäße 3/3-Wege-Elektromagnetventil 8 oder das erfindungsgemäße 3/2-Wege-Elektromagnetventil 74 also zwei 2/2-Wege-Magnetventile. In der beschriebenen Weise kann man aber auch die beiden 2/2-Wege-Elektromagnetventile 6 und 7 durch die erfindungsgemäßen Wege-Magnetventile 8 bzw. 74 ersetzen. Gleiches gilt natürlich auch für den Hinterachs-Bremskreis II. Im übrigen sind die beiden Bremskreise I und II mit Rückförderpumpen 9 und 10, Speichern 11 und 12 bzw. 13 und 14, einem nicht dargestellten elektronischen Steuergerät sowie nicht dargestellten Raddrehungssensoren versehen. Diese Elemente bilden eine Blockierschutzeinrichtung. Der Hinterachs-Bremskreis II ist durch Anordnung von zwei Ventilen 15 und 16 weitergebildet, damit in an sich bekannter Weise auch eine Antriebsschlupfregelung an nicht dargestellten Antriebsrädern, die dem Hinterachs-Bremskreis II zugeordnet sind, durchführbar ist. Radbremsen 17, 18, 19 und 20 sind dargestellte Fahrzeugräder zugeordnet.

In der Figur 2 ist, wie bereits erwähnt, das erste Ausführungsbeispiel des erfindungsgemäßen Wege-Elektromagnetventils als ein 3/3-Wege-Magnetventil 8 dargestellt. Es hat ein im wesentlichen rotationssymmetrisch ausgebildetes Gehäuse 21, mittels dem es in eine Bohrung 22 eines Gehäuseblockes 23 einsetzbar ist. Der Gehäuseblock 23 ist Bestandteil der angesprochenen Bremsblockierschutzeinrichtung. Beiderseits einer Mantelfläche 24 des Gehäuses 21 befinden sich zwei Ringnuten 25 und 26, in die zwei als O-Ringe ausgebildete unterschiedlich große Ringdichtungen 27 und 28 eingesetzt sind. Die beiden Ringdichtungen 27 und 28 sind auch zu beiden Seiten eines beispielsweise als Rücklaufkanal benützbaren Anschlußkanals 29 angeordnet. Eine dritte Dichtung 30 ist als eine Manschettendichtung ausgebildet, die von einem ringförmigen Manschettenhalter 21 getragen wird. Der Manschettenhalter 31 ist in das Gehäuse 21 eingesteckt und mit diesem verstemmt. Eine Dichtlippe 30a der Manschettendichtung 30 ist einem Hauptzylinder-Anschlußkanal 32 des Hauptbremszylinders 1 zugekehrt. Zwischen der Manschettendichtung 30 und der kleineren Ringdichtung 27 liegt ein Anschlußkanal 33, der beispielsweise einer der Radbremsen 17, 18, 19 bzw. 20 zugeordnet ist. Auf die Figur 1 bezogen, ist dies dort die Radbremse 19. Das Gehäuse 21 ist mit einer mehrfach abgestuften Durchgangsbohrung 34 versehen, deren eines Ende einen Stift 35 längsverschiebbar aufnimmt, der sich an einen Anker 36 anschließt. Der Anker 36 befindet sich längsverschiebbar innerhalb einer Spule 37 und bildet zusammen mit dieser einen Elektromagneten 38. Zwischen dem Anker 36 und der Spule 37 befindet sich ein Ankerführungsrohr 36a, das mit einem offenen Ende das Gehäuse 21 umfaßt und mit diesem verbunden ist. Ein domartig geschlossenes Ende 36b dient als ein Axialanschlag für den Anker 36 und dichtet das Gehäuse 21 relativ zur Umgebung hydraulisch ab. Die Spule 37 hat zwei Anschlußfahnen 39 und 40 zur Verbindung mit zwei elektrischen Leitungen 41 und 42, die von einem nicht dargestellten elektronischen Steuergerät ausgehen zur Versorgung der Spule 37 mit Strom.

Ebenfalls in der Gehäusebohrung 34 befindet sich ein Ventilsitzkörper 43, der beispielsweise per Preßsitz in der Gehäusebohrung 34 fixiert ist. Der Ventilsitzkörper 43 ist in Längsrichtung des Gehäuses 21 von zwei Durchgangsbohrungen 44 durchzogen, so daß beidendig des Ventilsitzkörpers 43 gleiche hydraulische Drücke herrschen. Die Durchgangsbohrungen 44 verlaufen parallel zum Stift 35 und dienen zur Führung von Stößeln 45 einer Stößeleinrichtung 46. Hierbei liegt der Stift 35 in einer Ventillängsachse 47; und die Achsen der beiden Stößel 45 sind gleichmäßig, also mit gleichem Bogenabstand um die Ventilachse 47 verteilt. Dabei haben die Stößel 45 von der Ventilachse 47 vorzugsweise gleiche Abstände, so daß sie also auch auf einem gedachten Teilkreis 48 liegen. Die genannte Anordnung auf dem Teilkreis 48 ist aber nicht zwingend erforderlich.

Ventilsitzseitig und also an einem von dem Stift 35 abgekehrten Ende erstreckt sich in den Ventilsitzkörper 43 hinein ein Axialkanal 62, der in einen Querkanal 62a mündet. Dieser Querkanal kommuniziert mit dem Anschlußkanal 29 des Gehäuseblocks 23. Ventilsitzseitig befindet sich ein Ventilsitz 49, dem als Schließkörper 50 eine Kugel zugeordnet ist, die von einem Halter 52 getragen wird, der ebenso wie ein weiterer Halter 53 in einer Hülse 56 angeordnet ist. An dem Halter 53 ist ebenfalls ein Schließkörper 54 in Form einer Kugel angeordnet. Dem Schließkörper 54 ist ein Ventilsitz 60 zugeordnet. Der Ventilsitz 49 und sein Schließkörper 50 bilden ein erstes Einzelventil 51 und der Schließkörper 54 und der Ventilsitz 60 bilden ein zweites Einzelventil 55. Zwischen den beiden Haltern 52 und 53 befindet sich eine die beiden Halter auseinanderspannende Feder 57. Der Halter 53 hat einen größeren Außendurchmesser als der Halter 52 und steht unter der Einwirkung einer zweiten Feder 58, die sich in der Hülse 56 abstützt. Schließlich ist zwischen dem Manschettenhalter 31 und der Hülse 56 noch eine dritte Feder 59 vorgesehen, die zum Anker 36 hin gegen die Hülse 56 wirkt und dabei den Schließkörper 50 gegen den Ventilsitz 49 des Einzelventils 51 drückt. Der Ventilsitz 60 des Einzelventils 61 befindet sich an einer Hülse 61, die in den hohl ausgebildeten Manschettenhalter 31 eingepreßt ist. Der Ventilsitz 60 kommuniziert durch die Hülse 61 und den Manschettenhalter 31 sowie die Bohrung 22 mit dem Hauptzylinder-Anschlußkanal 32.

Die Feder 59 bewirkt die Grundstellung des 3/3-Wege-Magentventils 8 in der, wie bereits erwähnt das Schließelement 50 auf dem Ventilsitz 49 ruht. Die Feder 58 ist als eine Barrierefeder konzipiert und die Feder 57 kann die Barrierefeder 58 unterstützen. Die Halter 52 und 53 sind relativ zur Hülse 56 beweglich angeordnet, so daß eine Verschiebung der Hülse 56 in Richtung zur Hülse 61 ein Aufsitzen des Schließkörpers 54 auf den Ventilsitz 60 bewirkt mittels der Kraft der Feder 57 und auch der Feder 58. Infolge der Gestaltung der Hülse 56 verbleibt dabei zunächst der Schließkörper 50 auf seinem Ventilsitz 49. Die dabei vorhandene Ausrichtung der Hülse 56 wird als Zwischenstellung bezeichnet. Bei weiterer Verschiebung der Hülse 56 in Richtung zur Hülse 61 unter Überwindung der Kraft der Feder 58 ist die Hülse 56 weiter verschiebbar in Richtung der Hülse 61, wobei sie gegen den Halter 52 wirkt und dabei den Schließkörper 50 von seinem Ventilsitz 49 entfernt. Es besteht also die Möglichkeit, den Hauptzylinder-Anschlußkanal 32 mit dem Anschlußkanal 33 zu verbinden und vom Anschlußkanal 29 zu trennen, alle Anschlußkanäle voneinander zu trennen und den Anschlußkanal 33 mit dem Anschlußkanal 29 zu verbinden. Bezogen auf die Figur 1 heißt dies, daß der Hauptbremszylinder 1 die Radbremse 19 mit Bremsdruck versorgen kann, daß die Radbremse 19 vom Hauptbremszylinder 1 hydraulisch trennbar ist, damit in der Radbremse 19 kein Druckanstieg mehr möglich ist, und daß schließlich die Radbremse 19 sowohl mit der Pumpe 10 als auch dem Speicher 13 verbindbar ist zum Absenken von in der Radbremse 19 herrschendem Bremsdruck. Wie anläßlich der Beschreibung der Federn 57, 58 und 59 hervorgeht, muß zum Herstellen der unterschiedlichen hydraulischen Verbindungen die Hülse 56 mit zwei unterschiedlichen Kräften verschoben werden. Diese unterschiedlichen Kräfte werden erzeugt durch unterschiedliche Erregung der Spule 37 mit Strom. Diese unterschiedlichen Ströme liefert das nicht dargestellte Steuergerät, das beispielsweise dem Stand der Technik entnommen werden kann. Der einschlägige Stand der Technik ist beispielsweise in den Druckschriften DE 22 57 213 C3 und DE 23 42 296 C2 enthalten. Die dort beschriebenen Steuergeräte steuern taktweise Endstufen an in der Weise, daß die aus den Endstufen in die wenigstens eine Spule 37 gelangenden Ströme Effektivwerte haben, die einerseits am Anker 36 eine zum Einstellen der Zwischenstellung wirkende erste Kraft und andererseits eine zum Öffnen des Einzelventils 51 ausreichende zweite Kraft zur Folge haben.

Benützt man die Lehre aus der Druckschrift DE 23 63 406 C2, so kann man aus der in der Figur 2 innerhalb der Hülse 56 angebrachten Federanordnung die Feder 58 weglassen, wenn man die Feder 57 und das nicht gezeichnete Steuergerät geeignet aufeinander abstimmt. Erkennbar ist dann weniger mechanischer Aufwand notwendig. Ergänzend wird erwähnt, daß ein in dieser Weise vereinfachtes Wege-Elektromagnetventil so aussieht wie ein 3-Anschlüsse-2-Stellungs-Elektromagnetventil mit sogenannter positiver Überdeckung, wobei mit positiver Überdeckung gemeint ist, daß in einer Transistion zwischen einer Grundstellung und einer elektromagnetisch bedingten Endstellung die Ventilsitze 49 und 60 beider Einzelventile 51 und 55 verschlossen sind.

Im Ausführungsbeispiel der Figur 2 sind die beiden Stößel 45 zu der Stößeleinrichtung 46 zusammengefaßt, indem diese beiden Stößel 45 gebildet werden von Schenkeln eines U-förmig gebogenen Bügels 63, wobei der Stift 35 anläßlich einer Bewegung des Ankers 36 gegen einen gebogenen Bereich des U-förmigen Bügels 63 wirkt.

Im Ausführungsbeispiel gemäß der Figur 3 besteht eine Stößeleinrichtung 64a aus zwei Einzel-Stiften 65 und ein Stift 35a wirkt über ein Element 35b gegen die Einzel-Stifte 65. Dabei ist dieses Zwischenelement 35b beispielsweise als eine quer zur Längsachse der Einzel-Stifte 65 ausgerichtete Platte ausgebildet, die zweckmäßigerweise fest mit dem Stift 35a verbunden ist. Die in dieser Art ausgebildete Stößeleinrichtung 64a kann in das Ausführungsbeispiel gemäß der Figur 2 eingebaut werden anstelle der dort dargestellten Stößeleinrichtung 46.

Im Unterschied zur Figur 2 zeigt die Figur 3 ein einfacher ausgebildetes 3/2-Wege-Magnetventil 74, bei dem Schließelemente 66 und 69 an einem gemeinsamen Halter 71 befestigt sind, wodurch die Schließelemente 66 und 69, die beispielsweise wieder als Kugeln ausgebildet sind, gemeinsam zwischen zwei Ventilsitzen 73 und 75 bewegbar sind. Vergleichbar mit dem ersten Ausführungsbeispiel befindet sich der Ventilsitz 75 an einer Hülse 76. Zwischen einen ebenfalls vorhandenen Halter 31 für eine Manschettendichtung 30 und den Halter 71 ist wiederum eine Feder 72 eingebaut, die die Grundstellung des 3/2-Weg-Elektromagnetventils 74 bestimmt. Dies ist die einzige Feder. Demzufolge können in einem Zeitraum, während der das Schließelement 66 von seinem Ventilsitz 73 abgehoben und das Schließelement 69 seinen Ventilsitz 75 noch nicht erreicht hat, alle drei Anschlüsse 32, 33 und 29 miteinander kommunizieren. Es gibt im Stand der Technik Blockierschutzeinrichtungen, in die ein solcher Ventiltyp eingebaut ist, so daß auch das in der Figur 3 dargestellte zweite Ausführungsbeispiel 74, wie bereits erwähnt, die in der Figur 1 per Symbole dargestellten Ventile 2, 3, 4, 5, 6, 7 und 8 ersetzen kann. Allerdings ist dann ein für die Ventilanordnungen gemäß der Figur 1 typisches Konstanthalten von Bremsdrücken in Radbremsen 16, 17, 19 und 20 nicht mehr möglich. Man muß sich dann mit Folgen von Bremsdruckanstiegen und dazwischen liegenden Bremsdruckabsenkungen im Blockierschutzbetrieb zufrieden geben. Mißt man während solcher Blockierschutzbetriebe die Bremsdrücke in den angesprochenen Radbremsen, so erkennt man sägezahnartige Bremsdruckverläufe. Die erfindunsgemäße Stößeleinrichtung, sei sie nun die Stößeleinrichtung 46 des ersten Ausführungsbeispiels oder die Stößeleinrichtung 64a des zweiten Ausführungsbeispiels, stellt bezüglich der Betätigung von Ventilelementen eine preisgünstige Lösung dar, die ohne eine Dichtung für einen Stößel auskommt und somit Stößelreibung an einer Dichtung und dadurch verursachte Hysterese vermeidet. Folglich sind zur Vermeidung von Radblockiergefahr oder zur Begrenzung von Bremsschlupf oder Antriebsschlupf Bremsdruckänderungen in einer jeweiligen der Radbremsen 16, 17, 19 oder 20 in besserer Qualität durchführbar.

Der Einsatz der erfindungsgemäßen Wege-Elektromagnetventile 8, 74 ist nicht auf das in der Figur 1 dargestellte Anwendungsbeispiel beschränkt.

## Patentansprüche

1. Wege-Elektromagnetventil mit mehreren hydraulischen Anschlüssen und mit einem Anker, der über eine Stößeleinrichtung auf Einzelteile des Wege-Elektromagnetventils einwirkt, wobei die Einzelteile in einem Gehäuse untergebracht sind und eine Spule, die zusammen mit dem Anker einen Elektromagnet bildet, außerhalb des Gehäuses angeordnet ist, dadurch gekennzeichnet, daß die Stößeleinrichtung (46, 64) aus wenigstens zwei parallelachsig zum Anker (36) angeordneten Stößeln (45, 65) besteht, daß ein Ventilsitzkörper (43) wenigstens zwei achsparallel verlaufende Durchgangsbohrungen (44) zur Führung der Stößel (45, 65) der Stößeleinrichtung (46, 64) aufweist und daß der Ventilsitzkörper (43) ausgehend von einem Ventilsitz (49, 73) zwischen den Durchgangsbohrungen (44) einen Kanal (62) hat, der mit einem Anschluß (29) kommuniziert.

2. Wege-Elektromagnetventil nach Anspruch 1, dadurch gekennzeichnet, daß bei Verwendung von zwei Stößeln (45) für die Stößeleinrichtung (46) die beiden Stößel (45) von Schenkeln eines U-förmigen Bügels (63) gebildet sind.

3. Wege-Elektromagnetventil nach Anspruch 1, dadurch gekennzeichnet, daß beide Einzel-Stößel (65) von einem plattenartigen Element (35b) gemeinsam verschiebbar sind, wobei dieses plattenartige Element (35b) seinerseits vom Anker (36) verschiebbar ist.

4. Wege-Elektromagnetventil nach einem der Ansprüche 1 bis 3, dadurch gekennzeichnet, daß das Gehäuse (21) im wesentlichen rotationssymmetrisch ausgebildet ist zum Einstecken in einen Gehäuseblock (23) unter gleichzeitiger Herstellung von drei hydraulischen Anschlüssen (29, 32, 33).

5. Wege-Elektromagnetventil nach Anspruch 4, dadurch gekennzeichnet, daß zu den hydraulischen Anschlüssen ein Anschlußkanal (29) im Gehäuseblock (23) gehört, der mit dem Axialkanal (62) im Ventilsitzkörper (43) kommuniziert und daß dem Anschlußkanal (29) in Zuordnung zu dem Ventilsitzkörper (43) zwei Ringdichtungen (27, 28) am Umfang des Gehäuses (21) zugeordnet sind.

6. Wege-Elektromagnetventil nach einem der Ansprüche 1 bis 5, dadurch gekennzeichnet, daß der Ventilsitzkörper (43) innerhalb des Gehäuses (21) per Preßsitz eingebaut ist.

7. Wege-Elektromagnetventil nach einem der Ansprüche 1 bis 6, dadurch gekennzeichnet, daß als eine dritte Dichtung eine Manschettendichtung (30) vorgesehen ist zum Trennen eines zweiten Anschlusses (33) von einem ersten Anschluß (32) und zum Verbinden des zweiten Anschlusses (33) mit dem dritten Anschluß (32) nach Art eines Rückschlagventiles.

8. Wege-Elektromagnetventil nach Anspruch 7, dadurch gekennzeichnet, daß sich durch die Manschettendichtung (30) ein Manschetten-Halter (31) erstreckt, der in das Gehäuse (21) eingesteckt ist und daß das Gehäuse (21) mit dem Manschetten-Halter (31) verstemmt ist.
